# EUROPEAN PATENT APPLICATION

(11) **EP 4 461 530 A1**
(43) Date of publication of application: **13.11.2024**
(21) Application number: 22918854.5
(22) Date of filing: 23.12.2022
(51) Int. Cl.: B32B 27/00, B29C 43/20, B29C 43/34, B32B 3/12, B32B 3/14

(54) **SANDWICH PANEL, SANDWICH PANEL MANUFACTURING METHOD, AND RELEASE FILM FOR SANDWICH PANEL MANUFACTURING**

(30) Priority: 07.01.2022 JP 2022001501; 18.02.2022 JP 2022023567
(71) Applicant: Sumitomo Bakelite Co.Ltd., Shinagawa-ku Tokyo 140-0002 (JP)
(72) Inventor: UESAKA Masao, Tokyo 140-0002 (JP); YAMATO Hajime, Tokyo 140-0002 (JP); KONOIKE Shogo, Tokyo 140-0002 (JP); ENOMOTO Yosuke, Tokyo 140-0002 (JP)
(74) Representative: Ter Meer Steinmeister & Partner
(86) International application number: PCT/JP2022/047547
(87) International publication number: WO 2023/132270

(57) **Abstract**

A sandwich panel (100) includes: a core layer (10) having a honeycomb structure; and cured products (40) of one or more prepregs (20) provided on both surfaces of the core layer (10), in which a part of the cured products (40) of the prepregs (20) penetrates into the core layer (10), and when an outermost surface of the sandwich panel (100) is observed, a number density of pinholes is 0 to 50 pieces/cm².

## Description

### TECHNICAL FIELD

The present invention relates to a sandwich panel, a method of manufacturing a sandwich panel, and a release film for manufacturing a sandwich panel.

### BACKGROUND ART

The sandwich panel includes: a hollow honeycomb core having a cross-section that is formed of hexagonal walls; and a pair of skin materials such as prepregs that are bonded to both surfaces of the honeycomb core. The sandwich panel that is light-weight and has high rigidity is used as, for example, a structural member for an airplane.

As the method of manufacturing a sandwich panel, various methods are disclosed. As a general method, for example, a technique described in Patent Document 1 is disclosed. From the viewpoint of reducing the residual voids with high quality and low cost, Patent Document 1 discloses a method of covering an uncured composite honeycomb sandwich panel in which a prepreg is laminated on upper and lower surfaces of a honeycomb core with a vacuum bag, disposing the uncured composite honeycomb sandwich panel in an autoclave, evacuating the inside of the vacuum bag, and heating and pressurizing the uncured composite honeycomb sandwich panel with the autoclave while continuing the evacuation.

### RELATED DOCUMENT

### PATENT DOCUMENT

[Patent Document 1] Japanese Unexamined Patent Publication No. 2020-1268

### SUMMARY OF THE INVENTION

### TECHNICAL PROBLEM

Recently, demand for the sandwich panel has increased. In particular, the voids remaining on the surface of the sandwich panel are called pinholes, and there is a problem that the external appearance of the sandwich panel is impaired. Even in the technique disclosed in Patent Document 1, there is room for improvement in terms of reducing the pinholes on the surface of the sandwich panel.

### SOLUTION TO PROBLEM

As a result of intensive studies to further reduce pinholes, the present inventors found that it is effective to use a release film when a honeycomb core and a prepreg are laminated and integrated. That is, the present inventors focused on the fact that unevenness caused by a texture of a fiber substrate forming the prepreg is one factor of the pinholes in the sandwich panel, and found that, by using a release film for integrating a core layer and the prepreg, the release film follows the unevenness and the surface of the prepreg can be more uniformly heated and pressurized, such that pinholes caused by appearance of voids on the surface of the prepreg can be suppressed, thereby completing the present invention.

In addition, according to the present invention, there is provided a method of manufacturing a sandwich panel, the method including:
a core layer having a honeycomb structure; and
cured products of one or more prepregs provided on both surfaces of the core layer,
in which a part of the cured products of the prepregs penetrates into the core layer, and
when an outermost surface of the sandwich panel is observed, a number density of pinholes is 0 to 50 pieces/cm².

According to the present invention, there is provided a method of manufacturing a sandwich panel, the method including:
a step of preparing a sheet-like core layer having a honeycomb structure and a plurality of sheet-like prepregs;
a step of laminating and disposing one or more prepregs on each of both surfaces of the core layer to form a laminate and disposing a release film over an outermost layer of the laminate; and
a step of performing a heating and pressurization process on the laminate together with the release film.

In addition, according to the present invention, there is provided a release film for manufacturing a sandwich panel, the release film including a first release layer provided on at least one surface,
in which the first release layer includes one kind or two or more kinds selected from a polyester resin, a poly(4-methyl-1-pentene) resin, a polyamide resin, and a polypropylene resin.

### ADVANTAGEOUS EFFECTS OF INVENTION

According to the present invention, a technique capable of reducing pinholes of a sandwich panel can be provided.

### BRIEF DESCRIPTION OF THE DRAWINGS

Fig. 1 is a schematic diagram showing an example of a sandwich panel according to an embodiment.
Fig. 2 is a cross-sectional view showing an example of steps of a method of manufacturing a sandwich panel according to the embodiment.
Fig. 3 is a cross-sectional view schematically showing a cross-section of a release film according to the embodiment.

### DESCRIPTION OF EMBODIMENTS

Hereinafter, an embodiment of the present invention will be described using the drawings. In all the drawings, the same components will be represented by the same reference numerals, and the description thereof will not be repeated appropriately.

In the present specification, the expression "a to b" in the description of a numerical range represents a or more and b or less unless specified otherwise. For example, "1 to 5 mass%" represents "1 mass% or higher and 5 mass% or lower".

In the present specification, an MD direction represents a machine direction and refers to a direction in which a resin flows, and a TD direction represents a transverse direction and refers to a direction perpendicular to the MD direction.

Unless specified otherwise, each of components and materials described as examples in the present specification may be used alone or in combination of two or more kinds thereof.

### 1. Sandwich Panel

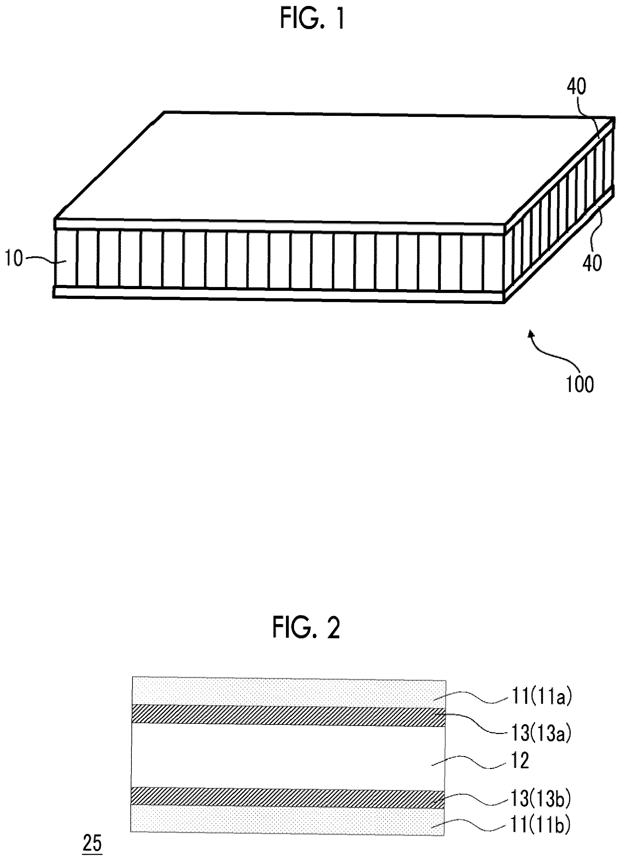

Fig. 1 is a schematic diagram showing an example of a sandwich panel according to the embodiment.

A sandwich panel 100 according to the embodiment includes a core layer 10 having a honeycomb structure, and a cured product 40 of a prepreg 20 provided on both surfaces of the core layer 10, in which a part of the cured product 40 of the prepreg 20 penetrates into the core layer 10. More specifically, a part of a binder resin forming the prepreg 20 penetrates into a through hole of the honeycomb structure of the core layer 10 and is cured. The reason for this is that, when the prepreg 20 in a B-stage state and the core layer 10 are integrated with each other by heating and pressurization in the process of manufacturing the sandwich panel 100, a part of the binder resin included in the prepreg 20 flows into the through hole of the core layer 10. As a result, a strong bond between the prepreg 20 and the core layer 10 is obtained.

In the embodiment, when an outermost surface of the sandwich panel 100 is observed, a number density of pinholes is 0 to 50 pieces/cm².

That is, the sandwich panel 100 according to the embodiment is obtained using a manufacturing method described below. Therefore, the appearance of voids is further suppressed as compared to the related art, and thus the number density of pinholes in the surface is reduced.

The number density of pinholes is preferably as low as possible and is more preferably 40 pieces/cm² or lower, still more preferably 30 pieces/cm² or lower, particularly preferably 20 pieces/cm² or lower, and particularly even more preferably 10 pieces/cm² or lower. In addition, it is suitable that the number density of pinholes in the both surfaces of the sandwich panel 100 is in the above-described range.

The number density of pinholes can be obtained by counting the number of holes that can be visually recognized when the surface of the sandwich panel 100 is observed with a magnifying glass (4- to 50-fold) and dividing the number of holes by the observed area.

Hereinafter, each of the members forming the sandwich panel 100 will be described.

### [Core Layer]

As the core layer 10, for example, a sheet-like member obtained by impregnating a binder resin into a substrate for a core layer having a honeycomb structure can be used. The core layer 10 can have high strength and lightness due to the honeycomb structure.

The honeycomb structure is a well-known structure and refers to a structure where a plurality of substantially regular hexagonal through holes that penetrate an upper surface to a lower surface are arranged.

Examples of the substrate having the honeycomb structure of the core layer 10 include a substrate obtained by forming aramid fiber, paper, balsawood, plastic, aluminum, titanium, glass, or an alloy thereof into a honeycomb shape using a well-known method. From the viewpoint of heat resistance, it is preferable that the substrate having the honeycomb structure of the core layer 10 includes aramid fiber.

In the core layer 10, the shape of the substrate is preferably woven fiber cloth. As a result, the workability into the honeycomb structure can be improved, and the weight of the sandwich panel 100 can be improved.

When the core layer 10 includes woven fiber cloth, portions where fibers cross each other are not likely to be pressurized in the manufacturing step, and voids are likely to remain. However, in the sandwich panel 100 according to the embodiment, the occurrence of pinholes caused by appearance of the voids on the surface can be effectively suppressed using the manufacturing method described below.

The thickness of the core layer 10 is not particularly limited and, for example, may be 1 mm or more and 50 mm or less, may be 3 mm or more and 40 mm or less, or may be 5 mm or more and 30 mm or less.

The size of each of core cells in the core layer 10 is not particularly limited. For example, the length of one side of the core cell may be 1 mm or more and 10 mm or less.

The area of the surface (upper surface, lower surface) of the core layer 10 is not particularly limited. For example, the area may include the surface of one sandwich panel 100 or may include the surface area of a plurality of sandwich panels. As a result, one sandwich panel 100 can be diced into a plurality of panels, which can improve the productivity. For example, the area of the surface (upper surface, lower surface) of the core layer 10 can be made large and, for example, may be 1 m² or more.

In addition, from the viewpoint of improving corrosion resistance or heat resistance, various surface treatments may be performed on the inside and/or the outside of the core layer 10.

### [Prepreg]

As the prepreg 20, for example, a sheet member in a B-stage state obtained by impregnating a binder resin into a substrate for a prepreg can be used.

The thickness per sheet of the prepreg 20 is appropriately adjusted depending on the use application, but is preferably 0.05 to 10 mm and more preferably 0.1 to 5 mm.

Regarding the binder resin impregnated into the substrate for a prepreg, the B-stage state refers to a state where a reaction rate calculated from the measurement result of DSC (differential scanning calorimeter) is preferably higher than 0% and 60% or lower, more preferably 0.5% or higher and 55% or lower, and still more preferably 1% or higher and 50% or lower.

Examples of the substrate for a prepreg of the prepreg 20 include a fiber substrate.

As the fiber substrate, aramid fiber, polyester fiber, polyphenylene sulfide fiber, carbon fiber, graphite fiber, glass fiber, or silicon carbide fiber can be used. From the viewpoint of high heat resistance, it is preferable that the fiber substrate includes glass fiber.

These fibers may be woven. When the fibers are woven, portions where a fiber (warp) and a fiber (weft) cross each other are not likely to be pressurized in the manufacturing step, and voids are likely to remain. However, in the sandwich panel 100 according to the embodiment, the occurrence of pinholes caused by appearance of the voids on the surface can be effectively suppressed using the manufacturing method described below.

Since the prepreg 20 comprises the fiber substrate, the heat resistance of the sandwich panel 100 can be further improved. In addition, since a difference in linear expansion coefficient between the prepreg 20 and the core layer 10 can be reduced, warpage of the sandwich panel 100 can be suppressed.

In the embodiment, the binder resins used in the core layer 10 and the prepreg 20 may be the same as or different from each other. However, from the viewpoint of effectively improving adhesiveness and increasing the flame resistance, it is preferable that the binder resins are the same as each other. The binder resin will be described below.

### [Cured Product]

An upper limit value of a glass transition temperature (Tg) of the cured product of the prepreg 20 is, for example, 250°C or lower, preferably 220°C or lower, and more preferably 200°C or lower. As a result, a heating and pressurization process can be performed under low temperature conditions. On the other hand, a lower limit value of the glass transition temperature (Tg), for example, may be 110°C or higher or may be 120°C or higher. As a result, heat time characteristics can be improved.

### [Use]

For example, the sandwich panel 100 according to the embodiment can be used as an interior panel of a lavatory, a partition, or the like or as a panel for equipment in an airplane such as a wagon chassis .

### 2. Method of Manufacturing Sandwich Panel

The method of manufacturing the sandwich panel 100 of the embodiment includes the following steps.
(Step 1) a step of preparing a sheet-like core layer 10 having a honeycomb structure and a plurality of sheet-like prepregs 20
(Step 2) a step of laminating and disposing one or more prepregs 20 on each of both surfaces of the core layer 10 to form a laminate and disposing a release film 25 over an outermost layer of the laminate
(Step 3) a step of performing a heating and pressurization process on the laminate together with the release film 25

Hereinafter, each of the steps will be described.

### (Step 1) Preparation of Core Layer 10 and Prepreg 20

The substrate for a core layer is prepared. It is preferable that the substrate for a core layer has a honeycomb structure and is formed of aramid fiber.

The substrate having the honeycomb structure is prepared and is impregnated with a binder resin. Next, the substrate is dried, and the core layer 10 is obtained.

On the other hand, the substrate for a prepreg is prepared. Examples of the substrate for a prepreg include the fiber substrate. The binder resin is impregnated with the substrate for a prepreg and then dried to obtain the prepreg 20 in the B-stage state.

In the core layer 10 and the prepreg 20, examples of the impregnation method of the binder resin include: a method of dissolving the binder resin in a solvent and spraying and applying the obtained binder solution to a binder substrate using a spraying device such as a spray nozzle; a method of dipping the binder substrate material in the binder solution; a method of applying the binder solution onto the binder substrate using various coaters such as a knife coater or a comma coater; and a method of transferring the binder solution onto the binder substrate using a transfer roll. In particular, a method of dipping the binder substrate in the binder solution is preferable.

In addition, heating and drying conditions are not particularly limited and are typically 100°C to 220°C and preferably 120°C to 190°C and 2 to 10 minutes.

### [Binder Solution]

The binder solution is a solution in which the binder resin and the like is dissolved in a well-known organic solvent, and a well-known solution can be used.

As the binder resin, a thermosetting resin is preferable, and examples thereof include a thermosetting resin such as a phenol resin, an unsaturated polyester resin, an epoxy resin, a melamine resin, or a furan resin.

In the phenol resin, condensed water is likely to be produced, and voids are likely to be formed. However, in the method of manufacturing a sandwich panel according to the embodiment, even when the phenol resin is used, the voids remain on the surface of the sandwich panel, and the number of pinholes can be effectively reduced.

Examples of the phenol resin include a compound having one or more phenolic hydroxyl group in a molecule, for example, a novolac resin such as novolac phenol, novolac cresol, or novolac naphthol; a bisphenol resin such as bisphenol For bisphenol A; a phenol aralkyl resin such as a paraxylene modified phenol resin; a resol phenol resin such as dimethylene ether resol or methylol phenol; a water-soluble phenol resin; and a compound obtained by methylolating the above-described resin or the like.

In addition, specific examples of the above-described water-soluble phenol resin include a phenol resin synthesized using one kind or two or more kinds selected from lignin, a lignin derivative, a lignin degradation product, and a modified product thereof. Examples of the lignin-modified product include those disclosed in Japanese Examined Patent Application Publication No. S48-22340. The lignin-modified phenol resin is obtained by reaction of a lignin, a phenol, and an aldehyde described below, in the presence of a catalyst.

The lignin used for the lignin-modified phenol resin includes at least one selected from lignin and a lignin derivative.

Lignin is a major component that forms a structure of a plant together with cellulose and hemicellulose, and is one of the most abundant aromatic compounds in nature. Examples of the lignin include: an alkaline lignin such as kraft lignin, soda lignin, soda-anthraquinone lignin, or pulp lignin including lignin sulfonic acid; organosolv lignin; high-temperature and high-pressure water-treated lignin; blast lignin; enzymatically saccharified lignin; lignophenol; and phenolated lignin.

The origin of lignin is not particularly limited. For example, wood or grass plant including lignin and where a woody part is formed can be used, examples thereof include: needle-leaved trees such as cedar, pine, and cypress; broad-leaved trees such as beech, birch, oak, and zelkova, and gramineous plants (grasses) such as rice, wheat, corn, and bamboo. In particular, lignin derived from a needle-leaved tree is preferable from the viewpoint of mechanical properties.

In the embodiment, the "lignin derivative" refers to a compound having a unit structure forming lignin or a structure similar to the unit structure constituting lignin. The lignin derivative includes a phenol derivative as the unit structure. Since this unit structure has a chemically and biologically stable carbon-carbon bond or carbon-oxygen-carbon bond, chemical degradation or biodegradation is not likely to occur.

Examples of the lignin derivative include guaiacylpropane (ferulic acid) represented by the following Formula (A), syringylpropane (sinapic acid) represented by the following Formula (B), and 4-hydroxyphenylpropane (coumaric acid) represented by the following Formula (C). The composition of the lignin derivative varies depending on biomass as a raw material. A lignin derivative mainly including a guaiacylpropane structure is extracted from a needle-leaved tree. A lignin derivative mainly including a guaiacylpropane structure and a syringylpropane structure is extracted from a broad-leaved tree. A lignin derivative mainly including a guaiacylpropane structure, a syringylpropane structure, and a 4-hydroxyphenylpropane structure is extracted from a grass plant.

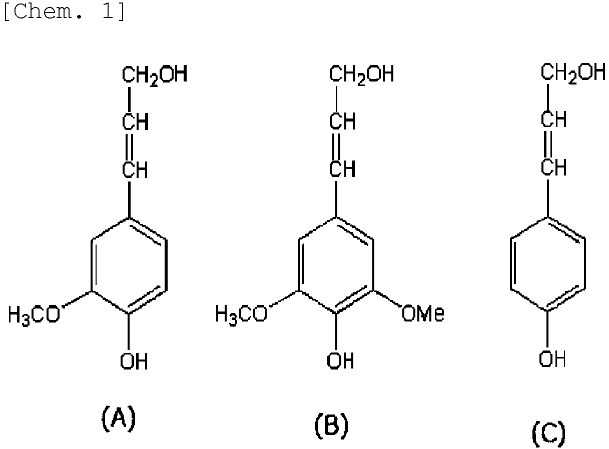

It is preferable that the lignin derivative is obtained by degrading biomass. The biomass is obtained by incorporating and fixing carbon dioxide in the atmosphere in the process of photosynthesis. Therefore, the biomass contributes to the suppression of an increase in carbon dioxide in the atmosphere, and the biomass can contribute to the suppression of global warming by the industrial utilization of the biomass. Examples of the biomass include a lignocellulose-based biomass. Examples of the lignocellulose-based biomass include leaves, barks, branches, and woods of plants including lignin, and processed products thereof. Examples of the plant including lignin include the broad-leaved trees, the needle-leaved trees, and the gramineous plants described above.

Examples of the lignin derivative include degradation products of lignocellulose where lignin, cellulose, and hemicellulose are bonded. The lignin derivative may include a lignin degradation product, a cellulose degradation product, a hemicellulose degradation product, or the like that includes a compound having a lignin skeleton as a major component.

It is preferable that the lignin derivative preferably has many reaction sites where a curing agent acts by an electrophilic substitution reaction with an aromatic ring. From the viewpoint that the reactivity is excellent when steric hindrance in the vicinity of the reaction sites is small, it is preferable that at least one of the ortho-position or the para-position of the aromatic ring including a phenolic hydroxyl group is unsubstituted. As the aromatic unit of the lignin, lignin derived from a needle-leaved tree or a grass plant that include many structures of a guaiacyl nucleus or a 4-hydroxyphenyl nucleus is preferable.

In addition, the lignin derivative may be a lignin derivative (lignin secondary derivative) having a functional group in addition to the above-described basic structure.

In addition, the epoxy resin is preferable from the viewpoint of improving the mechanical characteristics and the heat resistance of the prepreg 20.

The furan resin is a polymer or a precursor (oligomer) thereof that has, as a starting material, furfural or furfuryl alcohol obtained by reducing furfural. Examples of the furan resin include a furfuryl alcohol type, a furfuryl alcohol-furfural co-condensation type, a furfuryl alcohol-aldehyde co-condensation type, a furfural-ketone co-condensation type, a furfural-phenol co-condensation type, a furfuryl alcohol-urea co-condensation type, and a furfuryl alcohol-phenol co-condensation type. In addition, examples of the modified furan resin include an epoxy-modified furan resin, a phenol-modified furan resin, an aldehyde-modified furan resin, a urea-modified furan resin, and a melamine-modified furan resin.

The thermosetting resin may be formed of a natural product or a synthetic product as a raw material. Among these, a resin formed of a raw material derived from a natural product may be used. Examples of the resin derived from a natural product include a lignin-modified phenol resin and a furan resin obtained from biomass-derived furfural.

In addition, the binder solution may include additives other than the above-described thermosetting resin. The additives are not particularly limited, and examples thereof include a filler such as an inorganic filler, rubber, and a thermoplastic resin.

### (Step 2) Formation of Laminate and Disposition of Release Film

Next, as shown in Fig. 2A, the prepared prepreg 20 is laminated and disposed on each of both surfaces of the core layer 10 to form a laminate, and the release film 25 is disposed on the outermost layer of the laminate.

One prepreg 20 or a plurality of prepregs 20 may be laminated on one surface side of the core layer 10. The number of prepregs 20 laminated is not particularly limited, but it is suitable that about 2 to 5 prepregs 20 are laminated on one surface side of the core layer 10. In addition, when there are a plurality of prepregs 20, the prepregs 20 may have the same material and thickness, or may have different materials and thicknesses. In addition, the numbers of prepregs 20 laminated and disposed on the surfaces of the core layer 10 may be the same as (symmetrical structure with respect to the core layer 10) or different from each other.

In addition, in the embodiment, by using the release film 25, the release film 25 can highly follow fine unevenness and the like of the prepreg 20 during heating and pressurization, and heating and pressurization can be performed more uniformly. Therefore, pinholes caused by appearance of voids on the surface can be suppressed. In addition, even if voids are formed in the prepreg 20, a gap at an interface between the release film 25 and the prepreg 20 is reduced, and thus the appearance of voids on the surface can be suppressed.

Even if voids remain in the prepreg 20, the prepreg 20 is subsequently cured, and thus the voids do not appear on the surface of the obtained sandwich panel 100.

In the embodiment, the example in which the release film 25 is disposed on both outermost layers of the laminate is described. The release film 25 may be disposed on at least one outermost layer side of the laminate.

The details of the release film 25 will be described below.

### (Step 3) Heating and Pressurization Process

Next, as shown in Fig. 2B, a heating and pressurization process is performed on the above-described laminate using a metal plate 30 together with the release film 25. That is, the laminated sheet-like prepregs 20 is integrated with the core layer 10 by heating and pressurizing the laminate from the upper and lower surfaces of the prepregs 20 through the release film 25 and curing the prepregs 20. As a result, the sandwich panel 100 where the cured products 40 of the prepregs 20 and the core layer 10 are strongly bonded to each other can be obtained. In addition, a part of the prepregs 20 penetrates into the core layer 10, and the adhesiveness between the prepregs 20 and the core layer 10 can be improved.

The heating and pressurization process is performed preferably at 110°C to 150°C and 0.1 to 3.0 MPa and more preferably at 120°C to 140°C and 0.3 to 1.0 MPa.

By setting the temperature and the pressure of the heating and pressurization process to be the lower limit values or higher, the cured products 40 of the prepregs 20 and the core layer 10 can be strongly integrated.

On the other hand, by setting the temperature and the pressure of the heating and pressurization process to be the upper limit value or lower, the prepregs 20 can be appropriately integrated while suppressing fracture thereof.

In addition, in the embodiment, the entire surfaces of the prepregs 20 can be more uniformly pressurized through the release film 25, and the formation of pinholes on the surface of the sandwich panel 100 caused by appearance of voids on the surface of the sandwich panel 100 can be effectively suppressed. In particular, the release film 25 follows an uneven portion caused by a texture of the fiber substrate forming the prepreg 20 such the prepreg 20 can be more uniformly pressurized, and the formation of voids on the surface of the sandwich panel 100 can be suppressed. In addition, even if a recessed portion is formed on the surface of the prepreg 20 due to the penetration of a part of the prepreg 20 into the core layer 10, the formation of pinholes can be suppressed in the same manner by using the release film 25 in the embodiment.

As the metal plate 30, a well-known plate can be used, and examples thereof include a metal plate such as SUS plate, a tinned plate, an aluminum plate, or a magnesium plate.

In addition, the thickness of the metal plate 30 is not particularly limited and, for example, may be 0.5 mm or more and 10 mm or less, may be 0.8 mm or more and 5 mm or less, or may be 1.0 mm or more and 2.0 mm or less. In the above-described range, a balance between rigidity and thermal conductivity can be achieved.

Next, as shown in Fig. 2C, the release film 25 and the metal plate 30 are separated from each other to obtain the sandwich panel 100. In addition, since the release film 25 has excellent releasability, attachment of the sandwich panel 100 to the metal plate 30 is suppressed, and the sandwich panel 100 can be easily taken out.

### 3. Release Film

Next, the details of the release film 25 will be described.

### <First Embodiment>

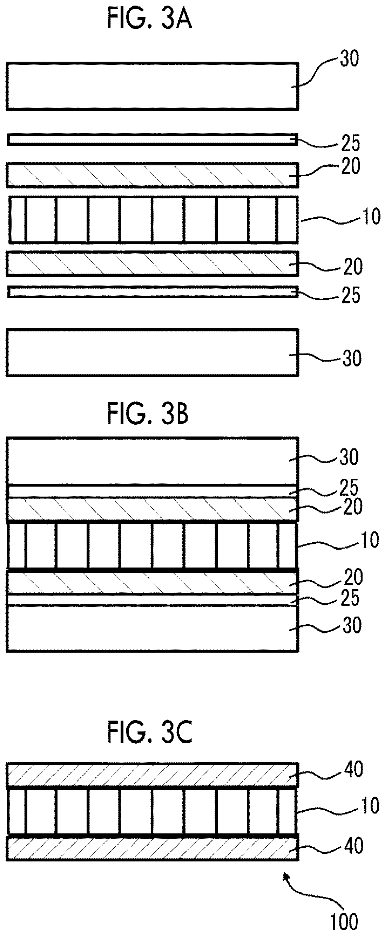

Fig. 3 is a cross-sectional view schematically showing a cross-section of the release film (hereinafter, also referred to as "release film") 25 for manufacturing a sandwich panel according to a first embodiment.

As shown in Fig. 3, a release film 25 of the first embodiment has a configuration in which a first release layer 11a forming one release surface, a cushioning layer 12, and a second release layer 11b forming another release surface are laminated in this order. In the first embodiment, an adhesive layer 13a is disposed between the first release layer 11a and the cushioning layer 12, and an adhesive layer 13b is disposed between the second release layer 11b and the cushioning layer 12.

In the first embodiment, the example in which the adhesive layer 13 and the second release layer 11b are provided is described, but the present invention is not limited thereto.

The lower limit of the thickness of the release film 25 is preferably 50 pm or more, more preferably 75 um or more, still more preferably 90 um or more, and particularly preferably 100 um or more. By setting the thickness of the release film 25 to be the above-described lower limit value or more, an appropriate strength during the manufacturing of the sandwich panel can be obtained, a balance between the releasability and the followability is excellent, and the external appearance of the sandwich panel can be improved.

On the other hand, the upper limit of the thickness of the release film 25 is preferably 300 µm or less, more preferably 200 µm or less, and still more preferably 160 um or less. By setting the thickness of the release film 25 to be the upper limit value or less, the handleability and the workability can be satisfactorily maintained.

In addition, the lower limit of the thickness of the release film 25 with respect to the total thickness of the prepreg 20 disposed on one surface side of the core layer 10 is preferably 5% or higher, more preferably 10% or higher, still more preferably 20% or higher, and particularly preferably 40% or higher.

On the other hand, the upper limit of the thickness of the release film 25 with respect to the total thickness of the prepreg 20 disposed on one surface side of the core layer 10 is preferably 80% or lower, more preferably 70% or lower, and still more preferably 65% or lower.

In the above-described numerical ranges, the release film 25 can further follow the prepreg 20 in the process of manufacturing the sandwich panel. As a result, the formation of pinholes in the sandwich panel can be reduced.

Hereinafter, each of the configurations will be described.

### [First Release Layer]

In the embodiment, the first release layer 11a forms one surface of the release film 25, and is on the sandwich panel side when the release film 25 is disposed in a mold.

The thickness of the first release layer 11a is preferably 10 to 100 µm, more preferably 15 to 70 µm, and still more preferably 20 to 50 um.

By setting the thickness of the first release layer 11a to be the above-described lower limit value or more, required releasability can be imparted to the release film 25. On the other hand, by setting the thickness of the first release layer 11a to be the above-described upper limit value or less, the rigidity of the release film 25 is controlled, and a balance between the suppression of sticking and the releasability can be improved.

The thickness (µm) of the first release layer 11a with respect to the total thickness (µm) of the release film 25 is preferably 0.1 to 0.4 and more preferably 0.15 to 0.35. As a result, followability to the surface of the prepreg 20 described below is improved, and excellent releasability is maintained.

In the embodiment, the first release layer 11a is formed of a first resin composition that is a resin composition for forming a release layer.

In addition, the first release layer 11a is a stretched or unstretched film formed of the first resin composition. Whether to use a stretched film or an unstretched film can be appropriately set. In order to improve the rigidity of the film, the stretched film is preferable, and in order to improve moldability, the unstretched film is preferable. In addition, the film can be stretched using a well-known method such as sequential biaxial stretching, simultaneous biaxial stretching, or tubular stretching.

Hereinafter, the details of the first resin composition will be described.

The first resin composition includes one kind or two or more kinds selected from a polyester resin, a poly(4-methyl-1-pentene) resin, a polyamide resin, and a polypropylene resin.

In particular, it is preferable that the first resin composition includes a poly(4-methyl-1-pentene) resin.

In addition to the above-described resin, the first resin composition may include other components within a range where the characteristics of the release film 25 are not impaired. The other components are not limited, and particles, a coupling agent, an acid catalyst, a solvent, an antistatic agent, a leveling agent, a dispersant, a pigment, a dye, an antioxidant, a flame retardant, a thermal conductivity improver, and the like can be appropriately blended.

### [Second Release Layer 11b]

In the embodiment, the second release layer 11b forms another surface of the release film 25 and is a surface of the release film 25 in contact with a mold when the release film 25 is disposed in the mold.

The thickness of the second release layer 11b is preferably 10 to 100 µm, more preferably 15 to 70 µm, and still more preferably 20 to 50 um.

By setting the thickness of the second release layer 11b to be the above-described lower limit value or more, the rigidity can be increased to improve the adhesiveness. On the other hand, by setting the thickness of the second release layer 11b to be the upper limit value or less, the flexibility of the release film 25 is improved, and excellent mold followability can be easily obtained.

The thickness (µm) of the first release layer 11b with respect to the total thickness (µm) of the release film 25 is preferably 0.1 to 0.4 and more preferably 0.15 to 0.35. As a result, excellent releasability with respect to the mold described below is maintained.

The thickness of the second release layer 11b may be the same as or different from that of the first release layer 11a, but is preferably the same as that of the first release layer 11a from the viewpoint of suppressing the warpage of the release film 25 and improving the handleability.

In addition, the second release layer 11b is a stretched or unstretched film formed of a second resin composition. Whether to use a stretched film or an unstretched film can be appropriately set. In order to improve the rigidity of the film, the stretched film is preferable, and in order to improve moldability, the unstretched film is preferable. In addition, the film can be stretched using a well-known method such as sequential biaxial stretching, simultaneous biaxial stretching, or tubular stretching.

Hereinafter, the details of the second resin composition will be described.

Examples of the second resin composition include the same materials as those described regarding the first resin composition. In addition, the second resin composition may be the same as or different from the first resin composition. From the viewpoint of improving the handleability of the release film 25, it is preferable that the second resin composition has the same material and composition as the first resin composition.

### [Cushioning Layer 12]

The cushioning layer 12 is a resin layer positioned between the first release layer 11a and the second release layer 11b that form the release surfaces of the release film 25. By appropriate cushioning characteristics and the like to the release film 25 and allowing the release film 25 to follow the surface shape of the sandwich panel, an excellent external appearance can be obtained.

The thickness of the cushioning layer 12 is preferably 20 to 100 µm, more preferably 40 to 90 um, and still more preferably 50 to 80 µm.

The thickness (µm) of the cushioning layer 12 with respect to the total thickness (µm) of the release film 25 is preferably 0.3 to 0.8, more preferably 0.40 to 0.70, and still more preferably 0.45 to 0.60. As a result, the followability to the prepreg 20 described below is improved, and the formation of pinholes can be effectively suppressed.

A softening point of the cushioning layer 12 is preferably 50°C to 160°C. By setting the softening point to be 50°C or higher, seepage of the resin from an end surface of the release film 25 during pressing can be suppressed, and secondary contamination such as attachment to a press hot plate or the like can be reduced. On the other hand, by setting the softening point to be 160°C or lower, excellent moldability can be maintained.

When the cushioning layer 12 is formed of a single resin, the softening point is a melting point of the resin.

It is preferable that the cushioning layer 12 is formed in a film shape using a resin composition for a cushioning layer. A method of forming the film is not particularly limited, and a well-known method can be used. For example, a well-known method such as extrusion, inflation, or calendaring can be applied.

In addition, the cushioning layer 12 may be formed of a stretched film or an unstretched film, and whether to use a stretched film or an unstretched film can be appropriately set. For example, in order to improve the rigidity of the film, the stretched film is preferable, and in order to improve moldability, the unstretched film is preferable. In addition, the film can be stretched using a well-known method such as sequential biaxial stretching, simultaneous biaxial stretching, or tubular stretching.

Examples of the resin composition for a cushioning layer include a polyolefin resin, a polyester resin, and a polyamide resin.

The above-described polyolefin resin is a resin having a structural unit derived from an α-olefin such as ethylene, propylene, or butene, and a well-known resin can be used. Specific examples of the polyolefin resin include: polyethylene (PE) such as low-density polyethylene (LDPE), medium-density polyethylene (MDPE), high-density polyethylene (HDPE), or linear low-density polyethylene (LLDPE); polypropylene (PP); polyvinyl alcohol (PVA); an ethylene-vinyl acetate copolymer (EVA); an ethylene-methyl acrylate copolymer (EMA); an ethylene-acrylic acid copolymer (EAA); an ethylene-methyl methacrylate copolymer (EMMA); an ethylene-ethyl acrylate copolymer (EEA); an ethylene-methacrylic acid copolymer (EMAA); an ionomer resin; and an ethylene-vinyl alcohol copolymer (EVOH) and a cyclic olefin resin (COP). The polyolefin resins may be used alone or in combination of two or more kinds.

In particular, an ethylene-methyl acrylate copolymer (EMA) ; an ethylene-acrylic acid copolymer (EAA); an ethylene-methyl methacrylate copolymer (EMMA); an ethylene-vinyl acetate copolymer (EVA); or polypropylene (PP) is preferable.

Examples of the polyester resin include one kind or two or more kinds selected from a polyethylene terephthalate resin (PET), a polyethylene terephthalate glycol resin (PETG), a polybutylene terephthalate resin (PBT), a polytrimethylene terephthalate resin (PTT), a polyhexamethylene terephthalate resin (PHT), and a polyethylene terephthalate-isophthalate copolymer resin (PET/PEI) .

Examples of the polyamide resin include an aliphatic polyamide and an aromatic polyamide. Specific examples of the aliphatic polyamide include polyamide 6, polyamide 6,6, a polyamide 6-6,6 copolymer, polyamide 11, and polyamide 12.

### [Adhesive Layer]

In the adhesive layer 13, a lamination strength between the first release layer 11a and the adhesive layer 13 used for suppressing the peeling of the first release layer 11a from the release film 25 is 200 to 2000 g/25 mm width. By setting the lamination strength to be the above-described lower limit value or more, when the sandwich panel is peeled off after using the release film 25, the peeling and remaining of the first release layer 11a on the sandwich panel side can be suppressed.

In addition, similarly, the lamination strength of the second release layer 11b and the adhesive layer 13 is preferably 200 to 2000 g/25 mm width. As a result, when the sandwich panel is peeled off after using the release film 25, the peeling and remaining of the second release layer 11b on the mold side can be suppressed.

The adhesive layer 13 includes a resin (a) having a melting point of 50°C or higher and lower than 130°C, a resin (b) having a melting point of 130°C or higher and lower than 180°C, and a resin (c) having a melting point of 180°C or higher and 300°C or lower. Examples of the resin (a) include an ethylene-methyl methacrylate copolymer, examples of the resin (b) include polypropylene, and examples of the resin (c) include a poly(4-methyl-1-pentene) resin. A mixing ratio (part(s) by mass) of the resin (a), the resin (b), and the resin (c) is not particularly limited, but (a):(b):(c) = 4 to 7:2 to 4:1 to 3 is preferable, and (a) : (b) : (c) = 4.5 to 6.5:2.5 to 3.5:1.5 to 2.5 is more preferable.

### [Manufacturing Method]

Next, a method of manufacturing the release film 25 according to the first embodiment will be described.

As a method of manufacturing the release film 25, a well-known method can be used, and for example, the release film 25 can be manufactured using a well-known method such as a co-extrusion method, an extrusion lamination method, a dry lamination method, an inflation method, an inflation extrusion method, and a T-die extrusion method. Alternatively, as described above, after forming each of the layers into a film shape, the films may be laminated using a well-known method to form the release film 25.

### <Second Embodiment>

The release film 25 according to a second embodiment is disposed on the outermost layer of the laminate including the prepreg 20 and the core layer 10, is heated and pressurized to follow the prepreg 20 during heating and pressurization, and then is peeled off. In addition, the release film 25 also has excellent releasability for the metal plate 30 described below.

Surface roughness values of both surfaces of the release film 25 may be the same as or different from each other. When the surface roughness values are different, it is preferable that a surface having a higher surface roughness is the prepreg 20 and a surface having a lower surface roughness is the metal plate 30 side described below.

### (Elastic Modulus or the like)

In the release film 25, a storage modulus (frequency 100 Hz, 100°C) E' measured after performing a heating process at 180°C for 120 seconds is 0.05 GPa or higher and 10 GPa or lower and more preferably 0.1 GPa or higher and 5 GPa or lower.

As a result, the peelability from unevenness of the release film 25 after the use of the release film 25 (after heating press) can be improved. That is, by controlling the value of the storage modulus E' after applying thermal history to be in the above-described numerical range, a variation in the degree of crystallinity of the release film 25 before and after the use of the release film 25 (before and after the heating press) can be increased, and thus the releasability can be improved while maintaining the followability. In addition, appropriate elasticity for the heating and pressurization process can be obtained, the pressure can be more uniformly applied, and the formation of voids in the sandwich panel 100 can be effectively reduced.

In addition, in the release film 25, a rigidity parameter G specified by the following Expression (1) is preferably 25 to 1500, more preferably 50 to 1000, and still more preferably 100 to 800. Rigidity Parameter G = Thickness [um] of Release Film 25 × Storage Modulus E' [GPa] (1)

The storage modulus of the release film 25 at 150°C measured using a dynamic viscoelasticity measuring device (tensile mode, frequency: 1 Hz, temperature increase rate: 5°C/min) is preferably 30 MPa or higher and 70 MPa or lower, and more preferably 40 MPa or higher and 60 MPa or lower.

By setting the storage modulus at 150°C to be the above-described lower limit value or higher, even when the heating press is performed using the release film 25, excellent hardness and rigidity can be obtained over the entire release film 25, and thus the releasability can be improved. In addition, a molded product having an excellent external appearance is obtained.

On the other hand, by setting the storage modulus at 150°C to be the above-described upper limit value or lower, embeddability can be easily obtained while maintaining excellent releasability during the heating press using the release film 25. In addition, an excellent external appearance of the molded product can be maintained.

A loss modulus of the release film 25 at 150°C measured using a dynamic viscoelasticity measuring device (tensile mode, frequency: 1 Hz, temperature increase rate: 5°C/min) is preferably 4 MPa or higher and 20 MPa or lower, and more preferably 5 MPa or higher and 15 MPa or lower.

By setting the loss modulus at 150°C to be the above-described lower limit value or higher, even when the heating press is performed using the release film 25, excellent viscosity can be obtained over the entire release film 25, and thus the embeddability can also be obtained while maintaining the releasability.

On the other hand, by setting the loss modulus at 150°C to be the above-described upper limit value or lower, the releasability can be easily obtained while maintaining excellent embeddability during the heating press.

A tanδ of the release film 25 at 150°C measured using a dynamic viscoelasticity measuring device (tensile mode, frequency: 1 Hz, temperature increase rate: 5°C/min) is preferably 0.05 or more and 0.3 or less and more preferably 0.1 or more and 0.2 or less.

By setting the tanδ at 150°C to be the above-described lower limit value or higher, even when the heating press is performed using the release film 25, appropriate viscoelasticity can be obtained over the entire release film 25, and a balance between the releasability and the embeddability can be improved.

### [Loop Stiffness]

A loop stiffness value of the release film 25 in the MD direction measured under conditions of 23°C, 50% RH, a width of 10 mm, a perimeter of 120 mm, and an insertion distance of 20 mm is preferably 45 to 90 mN, more preferably 50 to 80 mN, and still more preferably 55 to 75 mN.

By setting the loop stiffness value to be the lower limit value or more, excellent hardness and rigidity can be obtained over the entire release film 25.

On the other hand, by setting the loop stiffness value to be the above-described upper limit value or lower, the embeddability can be easily obtained while maintaining excellent releasability.

Regarding the loop stiffness, a stiffness strength is measured over time using a loop stiffness tester (manufactured by Toyo Seiki Co., Ltd.) under conditions of test pieces size: width 10 mm × 180 mm or width 15 mm × 180 mm (flow direction during film formation of the release film), loop length: 120 mm, and insertion amount: 20 mm, and a maximum value during the measurement can be defined as "value (mN/cm) measured in a loop stiffness test".

The storage modulus, the loss modulus, and the like of the release film 25 according to the second embodiment can be adjusted by a well-known method, for example, by controlling the total thickness of the release film 25, the layer configuration of the release film 25, a combination of the materials thereof, and the like.

### (Thickness)

The thickness of the release film 25 according to the second embodiment can be made the same as the thickness described in the first embodiment.

### (Surface Roughness)

An arithmetic average height Sa of one surface (surface on the prepreg 20 side) of the release film 25 is preferably 0.6 um or more and 2.3 µm or less, and more preferably 0.7 um or more and 2.0 µm or less.

By setting the arithmetic average height Sa to be the above-described lower limit value or more, the releasability from the prepreg 20 can be improved. On the other hand, by setting the arithmetic average roughness Sa to be the above-described upper limit value or less, the followability on the prepreg 20 can be satisfactorily maintained.

The arithmetic average height Sa can be measured according to ISO 25178.

A ten point average roughness Rz of one surface (surface on the prepreg 20 side) of the release film 25 is preferably 1 um or more and 10 µm or less, and more preferably 2 pm or more and 7 pm or less.

By setting the ten point average roughness Rz to be the above-described lower limit value or more, the releasability can be improved. On the other hand, by setting the ten point average roughness Rz to be the above-described upper limit value or less, the followability can be satisfactorily maintained.

The ten point average roughness Rz can be measured according to JIS B 0601 (1994).

An average unevenness interval Sm of one surface (surface on the prepreg 20 side) of the release film 25 is preferably 100 um or more and 350 µm or less, more preferably 150 um or more and 310 µm or less, and still more preferably 180 um or more and 300 µm or less. By setting the average unevenness interval Sm to be in the above-described range, air release between the release film 25 and the prepreg 20 is excellent, and thus the formation of voids or wrinkles caused by the remaining air is suppressed.

The average unevenness interval Sm can be measured according to JIS B 0601 (1994).

In the embodiment, the surface roughness of the release film 25 can be adjusted by controlling the thickness of the release film 25, the manufacturing method of the release film 25 or by controlling the blending of particles described below or the particle size of the particles.

For example, it is preferable that the resin forming the release film 25 includes one kind or two or more kinds selected from polyalkylene terephthalate resins including a polyethylene terephthalate resin (PET), a polybutylene terephthalate resin (PBT), a polytrimethylene terephthalate resin (PTT), and a polyhexamethylene terephthalate resin (PHT), a poly(4-methyl-1-pentene) resin (TPX), a syndiotactic polystyrene resin (SPS), and a polypropylene resin (PP). In particular, a polyethylene terephthalate resin (PET), a polybutylene terephthalate resin (PBT), a poly(4-methyl-1-pentene) resin (TPX), or a polypropylene resin (PP) is more preferable.

The release film 25 according to the embodiment may include particles. An average particle size d50 of the particles is preferably 3 um or more and more preferably 10 um or more. On the other hand, the average particle size d50 of the particles is preferably 35 um or less and more preferably 25 µm or less.

By setting the average particle size d50 of the particles to be the above-described lower limit value or more, the rigidity of the release film 25 can be improved, and the releasability from the prepreg 20 can be improved. On the other hand, by setting the average particle size d50 of the particles to be the above-described upper limit value or less, a balance between the releasability and the followability can be improved, and the sandwich panel 100 having an excellent finished external appearance can be prepared.

From the viewpoint of effectively improving the rigidity of the release film 25, the particles are preferably inorganic particles. Examples of the inorganic particles include particles formed of one kind or two or more kinds selected from the group consisting of a silica such as crystalline silica, amorphous silica, or fused silica, aluminum hydroxide, magnesium hydroxide, calcium carbonate, magnesium carbonate, calcium silicate, magnesium silicate, calcium oxide, magnesium oxide, zinc oxide, alumina, aluminum nitride, aluminum borate whisker, boron nitride, antimony oxide, E-glass, D-glass, S-glass, and zeolite. As the inorganic particles, one kind of particles may be used alone, or different kinds of particles may be used in combination. The inorganic particles may be surface-treated using a silane coupling agent or the like to improve adhesiveness to the resin, or core-shell particles obtained by performing an organic coating process on the inorganic particles may also be used to improve dispersibility.

A content of the particles is preferably 1 mass% or higher and 30 mass% or lower, and more preferably 5 mass% or higher and 20 mass% or lower with respect to the total amount of the release film 25.

The release film 25 may include well-known additives including an antioxidant, a slipping agent, an anti-blocking agent, an antistatic agent, a coloring agent such as a dye or a pigment, an additive such as a stabilizer, and an impact resistance imparting agent such as a fluororesin or silicone rubber, in addition to the resin and the particles.

### [Manufacturing Method]

The release film 25 according to the second embodiment is obtained by forming a film using a resin composition including the above-described resin and the like with a well-known method such as a co-extrusion method, an extrusion lamination method, a dry lamination method, or an inflation method. In addition, a stretching process may be performed. The stretching process may be simultaneous biaxial stretching or sequential biaxial stretching.

In addition, from the viewpoint of adjusting the surface roughness, embossing or the like may be performed.

In addition, the release film 25 may have a monolayer structure or a multilayer structure. When the release film 25 has a multilayer structure, not only the release layer forming the release surface but also a layer having a function such as a cushioning layer or a reinforcing layer may be provided. For example, a release film having a multilayer structure where a release layer, a cushioning layer, and a release layer are laminated in this order may be used.

Hereinabove, the embodiments of the present invention have been described with reference to the drawings. However, the embodiment is merely an example of the present invention, and various configurations other than the above-described configurations can also be adopted.

For example, the sandwich panel 100 according to the embodiment may include an adhesive layer between the core layer 10 and the prepreg 20 according to the purpose.

Hereinafter, an example of a reference embodiment will be added.
1. A sandwich panel including:
   a core layer having a honeycomb structure; and
   cured products of one or more prepregs provided on both surfaces of the core layer,
   in which a part of the cured products of the prepregs penetrates into the core layer, and
   when an outermost surface of the sandwich panel is observed, a number density of pinholes is 0 to 50 pieces/cm².
2. The sandwich panel according to 1.,
   in which a glass transition temperature of the cured products of the prepregs is 110°C or higher and 250°C or lower.
3. The sandwich panel according to 1. or 2.,
   in which the sandwich panel is used for an interior panel.
4. A method of manufacturing a sandwich panel, the method including:
   a step of preparing a sheet-like core layer having a honeycomb structure and a plurality of sheet-like prepregs;
   a step of laminating and disposing one or more prepregs on each of both surfaces of the core layer to form a laminate and disposing a release film over an outermost layer of the laminate; and
   a step of performing a heating and pressurization process on the laminate together with the release film.
5. The method of manufacturing a sandwich panel according to 4.,
   in which the heating and pressurization process is performed at 110°C to 150°C and 0.1 to 3.0 MPa.
6. The method of manufacturing a sandwich panel according to 4. or 5.,
   in which the prepreg is a sheet member in a B-stage state obtained by impregnating a binder resin into a substrate for a prepreg.
7. The method of manufacturing a sandwich panel according to 6.,
   in which the binder resin includes one kind or two or more kinds selected from a phenol resin, an unsaturated polyester resin, an epoxy resin, a melamine resin, and a furan resin.
8. The method of manufacturing a sandwich panel according to 6. or 7.,
   wherein the substrate for a prepreg includes woven fiber cloth.
9. The method of manufacturing a sandwich panel according to any one of 4. to 8.,
   in which in the release film, a rigidity parameter G specified by the following Expression (1) is 25 to 1500,
   the rigidity parameter G = a thickness [pm] of the release film × a storage modulus E' [GPa] (1),
   (in Expression (1), the storage modulus E' is measured under conditions of a frequency of 1 Hz and 100°C after performing a heating process on the release film at 180°C for 120 seconds.)
10. The method of manufacturing a sandwich panel according to any one of 4. to 9.,
   in which the release film includes one kind or two or more kinds selected from a polyethylene terephthalate resin (PET), a polybutylene terephthalate resin (PBT), a polytrimethylene terephthalate resin (PTT), a polyhexamethylene terephthalate resin (PHT), a poly(4-methyl-1-pentene) resin (TPX), a syndiotactic polystyrene resin (SPS), and a polypropylene resin (PP).
11. The method of manufacturing a sandwich panel according to any one of 4. to 10.,
   in which a thickness of the release film is 50 um or more and 300 µm or less.
12. A release film for manufacturing a sandwich panel, the release film including:
   a first release layer provided on at least one surface,
   in which the first release layer includes one kind or two or more kinds selected from a polyester resin, a poly(4-methyl-1-pentene) resin, a polyamide resin, and a polypropylene resin.
13. The release film for manufacturing a sandwich panel according to 12., further including:
   an adhesive layer in contact with the first release layer,
   in which a lamination strength between the first release layer and the adhesive layer is 200 g/25 mm width or more and 2000 g/25 mm width or less.
14. The release film for manufacturing a sandwich panel according to 12. or 13.,
   in which a thickness of the release film for manufacturing a sandwich panel is 50 um or more and 300 µm or less.
15. The release film for manufacturing a sandwich panel according to any one of 12. to 14.,
   in which the adhesive layer includes a resin (a) having a melting point of 50°C or higher and lower than 130°C, a resin (b) having a melting point of 130°C or higher and lower than 180°C, and a resin (c) having a melting point of 180°C or higher and 300°C or lower.
16. The release film for manufacturing a sandwich panel according to any one of 12. to 15.,
   in which a thickness of the first release layer is 10 um or more and 100 µm or less.
17. The release film for manufacturing a sandwich panel according to any one of 12. to 16., further comprising:
   a second release layer provided on a surface of the release film opposite to the first release layer; and
   a cushioning layer provided between the first release layer and the second release layer.
18. The release film for manufacturing a sandwich panel according to 17.,
   in which a softening point of the cushioning layer is 50°C or higher and 160°C or lower.
19. The release film for manufacturing a sandwich panel according to 17. or 18.,
   in which a thickness of the cushioning layer is 20 pm or more and 100 µm or less.
20. The release film for manufacturing a sandwich panel according to any one of 12. to 19.,
   in which the sandwich panel is used for an airplane. Examples

Hereinafter, examples of the present invention will be described in detail. However, the present invention is not limited to the description of the examples.

### 1. First Example

### (1) Preparation of Sandwich Panel

### <Example 1>

First, a prepreg was prepared according to the following procedure. A phenol resin 1 (resol phenol resin "34370" manufactured by Durez Plastics & Chemicals, Inc.) was compounded and was impregnated with glass fiber (#7781, manufactured by Hexcel Corporation) to obtain a sheet-like prepreg (thickness: 250 um) . The prepreg was in a B-stage state.

Next, a sandwich panel was prepared using the obtained prepreg according to the following procedure.

The prepreg prepared as described above was disposed on each of both surfaces of a honeycomb core (aramid fiber, thickness: 10 mm, HRH-10-1/8-3.0 (manufactured by Hexcel Corporation, area: 1 m × 3 m) to obtain a laminate.

Next, as shown in Table 1, a release film 1 (TPX (registered trade name) film "SUMILITE CEL-E960D", manufactured by Sumitomo Bakelite Co., Ltd., thickness: 120 µm) was disposed on upper and lower surfaces of the obtained laminate. Further, a SUS plate (thickness: 1.5 mm, Rz: 1.0 um) was pressed against the upper and lower surfaces, and the laminate was heated and pressurized using a mechanical press at 0.3 MPa and 130°C for 60 minutes to cure the prepreg and to integrate the core layer and the prepreg. Next, the release film 1 and the SUS plate were separated from each other to obtain a sandwich panel.

### <Example 2>

A sandwich panel was obtained using the same method as that of Example 1, except that the thickness of the release film 1 was 60 um.

### <Example 3>

A sandwich panel was obtained using the same method as that of Example 1, except that the release film 1 was changed to a release film 2 (polypropylene film "TORAYFAN" (registered trade name) manufactured by Toray Industries, Inc., thickness: 60 µm).

### <Example 4>

A sandwich panel was obtained using the same method as that of Example 1, except that the release film 1 was changed to a release film 3 (polyethylene terephthalate film., thickness: 100 µm).

### <Example 5>

A sandwich panel was obtained using the same method as that of Example 1, except that the phenol resin 1 used for the prepreg was changed to a phenol resin 2 (lignin-modified phenol resin "LMR-02-R4" manufactured by Sumitomo Bakelite Co., Ltd.).

### <Comparative Example 1>

A sandwich panel was obtained using the same method as that of Example 1, except that the release film 1 was not used.

### (2) Physical Properties of Release Film

Each of physical properties of the above-described release film was measured as follows.

(a) A heating process was performed on the release film at 180°C for 120 seconds. Next, when a dynamic viscoelasticity (DMA) was measured under conditions of a temperature increase rate of 5 °C/min and a frequency of 100 Hz, the storage modulus E' at 100°C was obtained.

### (3) Evaluation and Measurement of Sandwich Panel

Regarding the above-described sandwich panel, the following evaluation was performed. The evaluation results are shown in Table 1.

### ·Measurement of Pinholes

A surface of the obtained sandwich panel on the surface side was observed with a magnifying glass (4-fold), and the number of pinholes was measured to calculate the density.

In addition, when a cross-section of the sandwich panel was observed, it was found that a part of the binder resin of the prepreg penetrated into the core layer and cured.

**[Table 1]**

| | | | Example 1 | Example 2 | Example 3 | Example 4 | Example 5 | Comparative Example 1 |
|---|---|---|---|---|---|---|---|---|
| Heating and Pressurization Process | | °C | 130 | 130 | 130 | 120 | 130 | 130 |
| | | MPa | 0.3 | 0.4 | 0.5 | 0.3 | 0.3 | 0.3 |
| Prepreg | Binder Resin | - | Phenol Resin 1 | Phenol Resin 1 | Phenol Resin 1 | Phenol Resin 1 | Phenol Resin 2 | Phenol Resin 1 |
| Release Film | Kind | - | Release Film 1 | Release Film 1 | Release Film 2 | Release Film 3 | Release Film 1 | None |
| | Thickness | µm | 120 | 60 | 60 | 100 | 120 | - |
| Evaluation | Pinhole Density | Pieces/cm² | 1 | 8 | 25 | 50 | 4 | 150 |

### 2. Second Example

### (1) Raw materials of Release Film

·Poly(4-methyl-1-pentene) resin (TPX): product number MX004 (manufactured by Mitsui Chemicals, Inc.)
·Ethylene-methyl methacrylate copolymer (EMMA) : product number ACRYFT WH102 [melting point: 60 °C] (manufactured by Sumitomo Chemical Industry Co., Ltd.)
·Polyethylene (PE): SUMIKATHENE L211 [melting point: 100°C] (manufactured by Sumitomo Chemical Industry Co., Ltd.)
·Ethylene-vinyl acetate copolymer (EVA); VAC 10% EVAFLEX V5716RC [melting point: 65°C] (manufactured by Dow-Mitsui Polychemicals Co., Ltd.)
·Polypropylene (PP): NOBLEN FH1016 (manufactured by Sumitomo Chemical Industry Co., Ltd.)

### (2) Preparation of Release Film

### <Example 1>

TPX as a first release layer, a mixture of TPX, PP, and EMMA as a first adhesive layer, and EMMA as a cushioning layer were supplied to three extruders, respectively, and were co-extruded through a die. As a result, a release film having a layer configuration and a thickness shown in Table 2 was prepared.

### <Example 2>

TPX as a first release layer, a mixture of TPX, PP, and EMMA as a first adhesive layer (TPX/PP/EMMA = 5/3/2 (parts by mass), PE as a cushioning layer, a mixture of TPX, PP, and EMMA as a second adhesive layer (TPX/PP/EMMA = 5/3/2 (parts by mass), and TPX as a second release layer were supplied to five extruders, respectively, and were co-extruded through a die. As a result, a release film having a layer configuration and a thickness shown in Table 2 was prepared.

### <Examples 3 and 4>

Each of release films was prepared using the same method as that of Example 2, except that the material of the cushioning layer was changed as shown in Table 2.

### (3) Preparation of Sandwich Panel

First, a prepreg was prepared according to the following procedure. A phenol resin 1 (resol phenol resin "34370" manufactured by Durez Plastics & Chemicals, Inc.) was compounded and was impregnated with glass fiber (#7781, manufactured by Hexcel Corporation) to obtain a sheet-like prepreg (thickness: 250 um) . The prepreg was in a B-stage state.

Next, a sandwich panel was prepared using the obtained prepreg according to the following procedure.

The prepreg prepared as described above was disposed on each of both surfaces of a honeycomb core (aramid fiber, thickness: 10 mm, HRH-10-1/8-3.0 (manufactured by Hexcel Corporation, area: 1 m × 3 m) to obtain a laminate.

Next, each of the release films obtained as described above was disposed on upper and lower surfaces of the obtained laminate. Further, a SUS plate (thickness: 1.5 mm, Rz: 1.0 um) was pressed against the upper and lower surfaces, and the laminate was heated and pressurized using a mechanical press at 0.3 MPa and 130°C for 60 minutes to cure the prepreg and to integrate the core layer and the prepreg. Next, the release film and the SUS plate were separated from each other to obtain a sandwich panel.

### (4) Evaluation

Regarding the above-described sandwich panel, the following evaluation was performed. The evaluation results are shown in Table 2.

### ·Measurement of Pinholes (External Appearance)

A surface of the obtained sandwich panel on the surface side was observed with a magnifying glass (4-fold), and the number of pinholes was measured to calculate the density. The density was evaluated based on the following evaluation criteria.
A: less than 10 pieces/cm²
B: 10 pieces/cm² or more and less than 50 pieces/cm²
C: more than 50 pieces/cm²

**[Table 2]**

| | | Unit | Example 1 | Example 2 | Example 3 | Example 4 |
|---|---|---|---|---|---|---|
| First Release Layer | Raw Material | - | TPX | | | |
| | Thickness | µm | 30 | 30 | 30 | 30 |
| First Adhesive Layer | Raw Material | - | Mixture of EMMA/PP/TPX | | | |
| | Thickness | µm | 10 | 10 | 10 | 10 |
| Cushioning Layer | Raw Material | - | EMMA | EMMA | PE | EVA |
| | Thickness | µm | 70 | 70 | 70 | 70 |
| Second Release Layer | Raw Material | - | - | Mixture of EMMA/PP/TPX | | |
| | Thickness | µm | - | 10 | 10 | 10 |
| Second Adhesive Layer | Raw Material | - | - | TPX | | |
| | Thickness | µm | - | 30 | 30 | 30 |
| Measurement and Evaluation | Total Thickness | µm | 110 | 150 | 150 | 150 |
| | Lamination Strength | | B | B | B | B |
| | External Appearance | | A | A | A | A |

The present application claims priority based on Japanese Patent Application No. 2022-001501 filed on January 7, 2022 and Japanese Patent Application No. 2022-023567 filed on February 18, 2022, the disclosure of which is incorporated herein in its entirety.

### REFERENCE SIGNS LIST

- 10: core layer
- 11a: release layer
- 11b: release layer
- 12: cushioning layer
- 13: adhesive layer
- 13a: adhesive layer
- 13b: adhesive layer
- 20: prepreg
- 25: release film
- 30: metal plate
- 40: cured product
- 100: sandwich panel

## Claims

1. A sandwich panel comprising:
a core layer having a honeycomb structure; and
cured products of one or more prepregs provided on both surfaces of the core layer,
wherein a part of the cured products of the prepregs penetrates into the core layer, and
when an outermost surface of the sandwich panel is observed, a number density of pinholes is 0 to 50 pieces/cm².

2. The sandwich panel according to Claim 1,
wherein a glass transition temperature of the cured products of the prepregs is 110°C or higher and 250°C or lower.

3. The sandwich panel according to Claim 1 or 2,
wherein the sandwich panel is used for an interior panel.

4. A method of manufacturing a sandwich panel, the method comprising:
a step of preparing a sheet-like core layer having a honeycomb structure and a plurality of sheet-like prepregs;
a step of laminating and disposing one or more prepregs on each of both surfaces of the core layer to form a laminate and disposing a release film over an outermost layer of the laminate; and
a step of performing a heating and pressurization process on the laminate together with the release film.

5. The method of manufacturing a sandwich panel according to Claim 4,
wherein the heating and pressurization process is performed at 110°C to 150°C and 0.1 to 3.0 MPa.

6. The method of manufacturing a sandwich panel according to Claim 4 or 5,
wherein the prepreg is a sheet member in a B-stage state obtained by impregnating a binder resin into a substrate for a prepreg.

7. The method of manufacturing a sandwich panel according to Claim 6,
wherein the binder resin includes one kind or two or more kinds selected from a phenol resin, an unsaturated polyester resin, an epoxy resin, a melamine resin, and a furan resin.

8. The method of manufacturing a sandwich panel according to Claim 6 or 7,
wherein the substrate for a prepreg includes woven fiber cloth.

9. The method of manufacturing a sandwich panel according to any one of Claims 4 to 8,
wherein in the release film, a rigidity parameter G specified by the following Expression (1) is 25 to 1500,
the rigidity parameter G = a thickness [um] of the release film × a storage modulus E' [GPa] (1),
(in Expression (1), the storage modulus E' is measured under conditions of a frequency of 1 Hz and 100°C after performing a heating process on the release film at 180°C for 120 seconds).

10. The method of manufacturing a sandwich panel according to any one of Claims 4 to 9,
wherein the release film includes one kind or two or more kinds selected from a polyethylene terephthalate resin (PET), a polybutylene terephthalate resin (PBT), a polytrimethylene terephthalate resin (PTT), a polyhexamethylene terephthalate resin (PHT), a poly(4-methyl-1-pentene) resin (TPX), a syndiotactic polystyrene resin (SPS), and a polypropylene resin (PP).

11. The method of manufacturing a sandwich panel according to any one of Claims 4 to 10,
wherein a thickness of the release film is 50 um or more and 300 um or less.

12. A release film for manufacturing a sandwich panel, the release film comprising:
a first release layer provided on at least one surface,
wherein the first release layer includes one kind or two or more kinds selected from a polyester resin, a poly(4-methyl-1-pentene) resin, a polyamide resin, and a polypropylene resin.

13. The release film for manufacturing a sandwich panel according to Claim 12, further comprising:
an adhesive layer in contact with the first release layer,
wherein a lamination strength between the first release layer and the adhesive layer is 200 g/25 mm width or more and 2000 g/25 mm width or less.

14. The release film for manufacturing a sandwich panel according to Claim 12 or 13,
wherein a thickness of the release film for manufacturing a sandwich panel is 50 um or more and 300 um or less.

15. The release film for manufacturing a sandwich panel according to any one of Claims 12 to 14,
wherein the adhesive layer includes a resin (a) having a melting point of 50°C or higher and lower than 130°C, a resin (b) having a melting point of 130°C or higher and lower than 180°C, and a resin (c) having a melting point of 180°C or higher and 300°C or lower.

16. The release film for manufacturing a sandwich panel according to any one of Claims 12 to 15,
wherein a thickness of the first release layer is 10 um or more and 100 um or less.

17. The release film for manufacturing a sandwich panel according to any one of Claims 12 to 16, further comprising:
a second release layer provided on a surface of the release film opposite to the first release layer; and
a cushioning layer provided between the first release layer and the second release layer.

18. The release film for manufacturing a sandwich panel according to Claim 17,
wherein a softening point of the cushioning layer is 50°C or higher and 160°C or lower.

19. The release film for manufacturing a sandwich panel according to Claim 17 or 18,
wherein a thickness of the cushioning layer is 20 um or more and 100 um or less.

20. The release film for manufacturing a sandwich panel according to any one of Claims 12 to 19,
wherein the sandwich panel is used for an airplane.
